# EUROPEAN PATENT APPLICATION

(11) **EP 4 432 431 A2**
(43) Date of publication of application: **18.09.2024**
(21) Application number: 23188096.4
(22) Date of filing: 27.07.2023
(51) Int. Cl.: H01M 50/15, H01M 50/176, H01M 50/184, H01M 50/188, H01M 50/342, H01M 50/553, H01M 50/627

(54) **BATTERY COVER PLATE AND A BATTERY WITH THE SAME**

(30) Priority: 17.03.2023 CN 202320530173 U
(71) Applicant: Hubei Taipu Electronic Co., Ltd., Shiyan, City Hubei 442211 (CN)
(72) Inventor: ZHAO, Wenjie, Shiyan City, Hubei Province China (CN)
(74) Representative: Herrero & Asociados, S.L.

(57) **Abstract**

The present disclosure provides a battery cover plate including an electrode post plate, a hot-melt adhesive film, a cover plate assembly and a busbar; the cover plate assembly defines a first through hole; the electrode post plate and the busbar are located on two sides of the first through hole, a boss is arranged on the busbar, the boss is embedded in the first through hole, one end of the boss is connected with the electrode post plate. With the hot-melt adhesive film covered on the first through hole, the electrode post plate and the hot-melt adhesive film are placed on the first through hole; under the action of thermal pressing, the electrode post plate and the cover plate assembly are thermally fused together; the hot-melt adhesive film can further seal a part of the boss to fix the electrode post plate in a more reliable way.

## Description

### TECHNICAL FIELD

The present disclosure relates to technologies of batteries, and more particularly, to a battery cover plate and a battery with the same.

### BACKGROUND

Under the guidance of the rapid development of new energy vehicles, electrification has gradually become the main trend of global development. In the next few decades, the sales of new energy products such as new energy vehicles, including electric vehicles and gas-electric hybrid power vehicles, energy storage products, and new energy consumer electronics will continue to increase, and the using of cover plates of batteries of these energy products will also correspondingly increase.

As a component of the battery, a top cover is capable of providing a sealing effect for the battery. In addition, since a positive electrode and a negative electrode of the battery are arranged on the top cover, the top cover is used as a connection between the positive electrode and the negative electrode during the charging and discharging process of the battery; moreover, an explosion-proof valve arranged on the top cover can release gas in extreme situations to avoid a high pressure explosion of the battery.

At present, a traditional rubber ring made of polyfluoroalkoxy is used in the battery for providing sealing effect, which is not environmentally friendly; furthermore, the battery cover plate includes a lot of components, resulting in a high production cost; moreover, a thickness of the battery cover plate is large, resulting in a low volume energy density of the battery. Therefore, how to overcome the above technical problems and defects has become the key problem to be solved.

### SUMMARY OF THE DISCLOSURE

The present disclosure provides a battery cover plate, aiming to solve the problem that a thickness of the battery cover plate is large and the battery cover plate is not environmentally friendly.

A battery cover plate, wherein the battery cover plate is configured for enclosing a housing of a battery to form the battery; the battery cover plate includes an electrode post plate, a hot-melt adhesive film, a cover plate assembly and a busbar; the cover plate assembly defines a first through hole; the electrode post plate and the busbar are located on two sides of the first through hole of the cover plate assembly, a boss is arranged on the busbar, the boss is embedded in the first through hole, and one end of the boss is connected with the electrode post plate; the hot-melt adhesive film includes an annular sheet and a sealing gasket cylinder; a second through hole is defined in the annular sheet at a position corresponding to the first through hole, and the sealing gasket cylinder is connected with the second through hole and extends along a direction perpendicular to a plane where the annular sheet is located; the sealing gasket cylinder is arranged between the electrode post plate and the cover plate assembly by thermal fusion, and the sealing gasket cylinder is sleeved between an outer wall of the boss and an inner wall of the first through hole.

In an embodiment, the hot-melt adhesive film is selected from the group consisting of a PP adhesive adhesive film, a PE adhesive film, a polyimide adhesive film, and an epoxy resin adhesive film.

In an embodiment, the cover plate assembly includes a plastic plate and a metal cover plate stacked on the plastic plate; a third through hole is defined in the metal cover plate, and a fourth through hole is defined in the plastic plate at a position corresponding to the third through hole, and the third through hole and the fourth through hole are communicated with each other to form the first through hole.

In an embodiment, the plastic plate is provided with an annular protrusion arranged along a peripheral of the fourth through hole and facing towards the metal cover plate, the boss is embedded in the annular protrusion, the annular protrusion is embedded in the third through hole, and the sealing gasket cylinder is connected between an outer wall of the annular protrusion and an inner wall of the third through hole by thermal fusion.

In an embodiment, the cover plate assembly is provided with a an explosion-proof valve.

In an embodiment, the explosion-proof valve is arranged on the metal cover plate, a groove is formed in a middle part of the plastic plate, an opening of the groove is enclosed by the metal cover plate, the explosion-proof valve is located at the opening of the groove, and a plurality of ventilation liquid holes are defined in a bottom of the groove.

In an embodiment, the boss is integrally formed by stretching the busbar towards the electrode post plate, and the busbar is made of material selected from a group consisting of aluminum, copper, nickel, iron, titanium, silver, and zirconium.

In an embodiment, a single electrode post plate, a single hot-melt adhesive film and a single busbar are arranged on a single battery cover plate.

In an embodiment, two or more battery cover plates, two or more hot-melt adhesive films, and two or more busbars are arranged on a single battery cover plate; and the two or more electrode post plates, the two or more hot-melt adhesive films, the two or more busbars respectively correspond to each other.

In an embodiment, the cover plate assembly is provided with a liquid injection port and an explosion-proof valve.

The present disclosure further provides a battery including the above battery cover plate.

With the hot-melt adhesive film covered on the first through hole, the electrode post plate and the hot-melt adhesive film are placed on the first through hole; under the action of thermal pressing, the electrode post plate and the cover plate assembly are thermally fused together through the hot-melt adhesive film; the hot-melt adhesive film can further seal a part of the boss to fix the electrode post plate in a more reliable way, avoiding the using of a traditional rubber ring made of polyfluoroalkoxy which is not environmentally friendly. Furthermore, the hot-melt adhesive film has a small thickness, which can reduce an overall thickness of the battery cover plate at the electrode post plate, which is beneficial to reduce an overall height of the battery and improve a volume energy density of the battery.

### BRIEF DESCRIPTION OF THE DRAWINGS

In order to explain the technical solutions in the embodiments of the present disclosure or the prior art more clearly, the drawings used by the description of the embodiments or the prior art will be briefly introduced below. Obviously, the drawings in the following description may be merely some embodiments of the present disclosure. For those of ordinary skilled in the art, other drawings may be obtained according to the structures shown in the drawings without creative effort.
FIG. 1 is a schematic view of a battery cover plate and a battery with the same in accordance with an embodiment of the present disclosure;
FIG. 2 is a partially-exploded view of the battery cover plate in accordance with an embodiment of the present disclosure;
FIG. 3 is an exploded view of the battery cover plate in accordance with an embodiment of the present disclosure;
FIG. 4 is a schematic view of a hot-melt adhesive film of the battery cover plate in accordance with an embodiment of the present disclosure;
FIG. 5 is a schematic view of a battery cover plate and a battery with the same in accordance with another embodiment of the present disclosure; and
FIG. 6 is an exploded view of the battery cover plate in accordance with another embodiment of the present disclosure.

Reference signs are as follows:
- 1: Electrode post plate
- 2: Hot-melt adhesive film
- 21: Annular sheet
- 22: Sealing gasket cylinder
- 23: Second through hole
- 3: Cover plate assembly
- 31: First through hole
- 32: Metal cover plate
- 321: Third through hole
- 322: Liquid injection port
- 323: Explosion-proof valve
- 33: Plastic plate
- 331: Fourth through hole
- 332: Annular protrusion
- 333: Groove
- 334: Ventilation liquid hole
- 4: Busbar
- 41: Boss

The purpose realization, functional characteristics and advantages of the present disclosure will be further described with reference to the drawings in combination with the embodiments as described hereinafter.

### PREFERRED EMBODIMENTS

In the following, the technical solutions in the embodiments of the present disclosure will be clearly and completely described with reference to the drawings in the embodiments of the present disclosure. Obviously, the described embodiments may be only a part of the embodiments of the present disclosure, but not all of the embodiments. Based on the embodiments of the present disclosure, all other embodiments obtained by those of ordinary skilled in the art without creative effort shall fall within the protection scope of the present disclosure.

In the description of the present utility model, it should be understood that orientations or positional relationships indicated by terms such as "side", "inside" and "outside" are orientations or positional relationships shown based on the figures, and the terms are merely for convenience of describing the present utility model and for simplifying the description, but for indicating or implying that an indicated apparatus or element must have a specific orientation, and must be constructed and operated in a specific orientation, which thus may not be understood as limiting the present utility model. In the description of the application, it is noted that, except as otherwise noted, the term "a plurality of" means two or more.

In the present disclosure, it is stated that, unless otherwise expressly defined, the term "connecting" should be understood broadly. For example, it may mean a fixed connection, a removable connection, or an all-in-one connection, a mechanical connection, an electrical connection, or a communicating connection, a direct connection, an indirect connection through other means, an internal connection between two parts, or an interaction between two parts. The person skilled in the art could understand the specified meaning in the present disclosure.

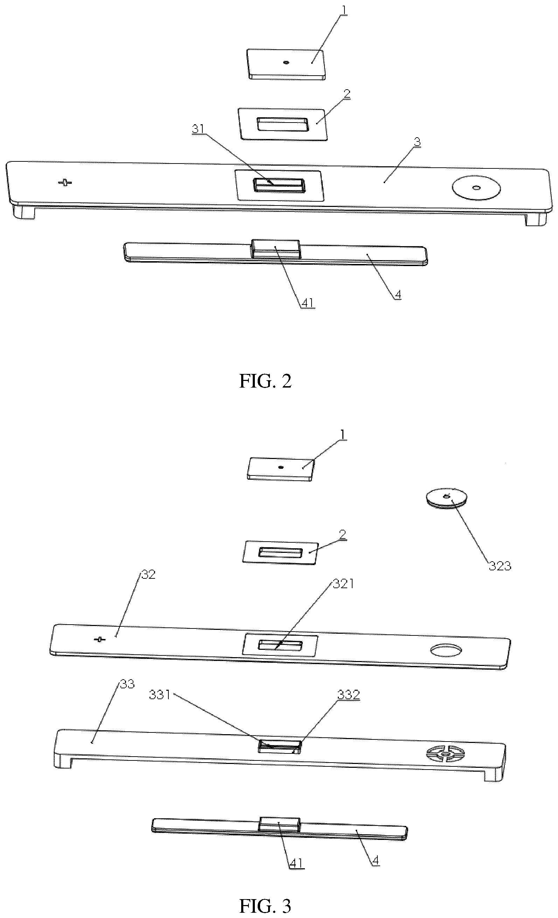

As shown in FIG. 2, in an embodiment, the present disclosure provides a battery cover plate. The battery cover plate is configured to enclose a housing of a battery to form the battery. The battery cover plate includes an electrode post plate 1, a hot-melt adhesive film 2, a cover plate assembly 3, and a busbar 4. The cover plate assembly 3 defines a first through hole 31. The electrode post plate 1 and the busbar 4 are located on two sides of the first through hole 31 on the cover plate assembly 3. The busbar 4 is provided with a boss 41. The boss 41 is embedded into the first through hole 31, and an end of the boss 41 is connected with the electrode post plate 1. The hot-melt adhesive film 2 includes an annular sheet 21 and a sealing gasket cylinder 22. A second through hole 23 is defined in the annular sheet 21 at a position corresponding to the first through hole 31. The sealing gasket cylinder 22 is connected with the second through hole 23 of the annular sheet 21 and extends along a direction perpendicular to a plane where the annular sheet 21 is located. The annular sheet 21 is thermally fused between the electrode post plate 1 and the cover plate assembly 3, and the gasket cylinder body 22 is sleeved between an outer wall of the boss 41 and an inner wall of the first through hole 31.

In some embodiments, the hot-melt adhesive film is selected from the group consisting of a PP adhesive film, a PE adhesive film, a polyimide adhesive film and an epoxy resin adhesive film.

In an embodiment, the hot-melt adhesive film 2 is a PP adhesive film, which has the characteristics of insulation and thermal-fixing.

In most embodiments of the present disclosure, a thickness of the hot-melt adhesive film is not specially limited. In some embodiments, the thickness of the hot-melt adhesive film is from 10µm to 500µm. When the thickness of the hot-melt adhesive film is within the above range, on the one hand, the hot-melt adhesive film is beneficial to ensure the sealing connection effect, on the other hand, the adverse impact on an overall thickness of the battery cover plate caused by the excessive thickness of the hot-melt adhesive film can be avoided.

In the battery cover plate provided in the present disclosure, the hot-melt adhesive film 2 is covered on the first through hole 31, and the electrode post plate 1 and the hot-melt adhesive film 2 together are placed on the first through hole 31; under the action of thermal pressing, the electrode post plate 1 and the cover plate assembly 3 are thermally fused together through the annular sheet 21 of the hot-melt adhesive film 2; at the same time, the sealing gasket cylinder 22 of the hot-melt adhesive film 2 can further seal a part of the boss 41 by thermal fusion, which provides a better sealing effect at the first through hole 31 of the electrode post plate 1 and fixes the electrode post plate 1 in a more reliable way. Moreover, since the sealing effect can be provided through the sealing gasket cylinder 22 without using a traditional rubber ring made of polyfluoroalkoxy, the battery cover plate is environmentally friendly. Furthermore, the hot-melt adhesive film 2 has a small thickness, which can avoid the space occupation of the battery cover plate and reduce the overall thickness of the battery cover plate at the position of the electrode post plate 1, which is beneficial to reduce an overall height of the battery and improve a volume energy density of the battery.

As shown in FIG. 3, in an embodiment, the cover plate assembly 3 includes a plastic plate 33 and a metal cover plate 32 stacked on the plastic plate 33. A third through hole 321 is defined in the metal cover plate 32, and a fourth through hole 331 is defined in the plastic plate 33 at a position corresponding to the third through hole 321. The third through hole 321 and the fourth through hole 331 are communicated with each other to form the first through hole 31.

In an embodiment, the boss 41 passes through the third through hole 321 and the fourth through hole 331 in turn to abut a surface of the electrode post plate 1.

The plastic plate 33 is arranged below the metal cover plate 32 to separate a battery cell from the metal cover plate 32. Since the metal cover plate 32 is made of metal, the plastic plate 33 can insulate the metal cover plate 32 from the battery cell to avoid the electrical connection between the metal cover plate 32 and the battery cell.

In some embodiments, the material of the metal cover plate 32 may be selected from the group consisting of aluminum, aluminum alloy, magnesium, magnesium alloy, iron iron alloy, nickel, nickel alloy, copper, and copper alloy, as required.

In other embodiments, the metal cover plate 32 can be replaced by a cover plate made of corrosion resistant non-metallic materials.

Furthermore, the sealing gasket cylinder 22 of the hot-melt adhesive film 2 can seal the part of the boss 41 by thermal fusion, so as to fix the electrode post plate 1 by forming a better sealing effect in the third through hole 321 and the fourth through hole 331 where the the electrode post plate 1 is mounted.

As shown in FIG. 3, in an embodiment, the plastic plate 33 is provided with an annular protrusion 332 arranged along a peripheral of the fourth through hole 331 and facing towards the metal cover plate 32. The boss 41 is embedded in the annular protrusion 332, and the annular protrusion 332 is embedded in the third through hole 321. The sealing gasket cylinder 22 is connected between an outer wall of the annular projection 332 and an inner wall of the third through hole 321 by thermal fusion.

In some embodiments, when a surface of the boss 41 is rectangular, the third through hole 321 is a rectangular hole, that is, the protrusion arranged along the peripheral of the third through hole 321 forms a rectangular frame. The boss 41 is embedded in the third through hole 321 and is located inside the protrusion; correspondingly, the first through hole 31 and the second through hole 23 are rectangular holes.

Furthermore, when the surface of the boss 41 is circular, the third through hole 321 is a circular hole, that is, the protrusion arranged along the peripheral of the third through hole 321 forms a circular frame. The boss 41 is embedded in the third through hole 321 and is located inside the protrusion; correspondingly, the first through hole 31 and the second through hole 23 are circular holes.

Furthermore, the boss 41, the third through hole 321, the protrusion, the first through hole 31, and the second through hole 23 can also be of the same shape and can be used together.

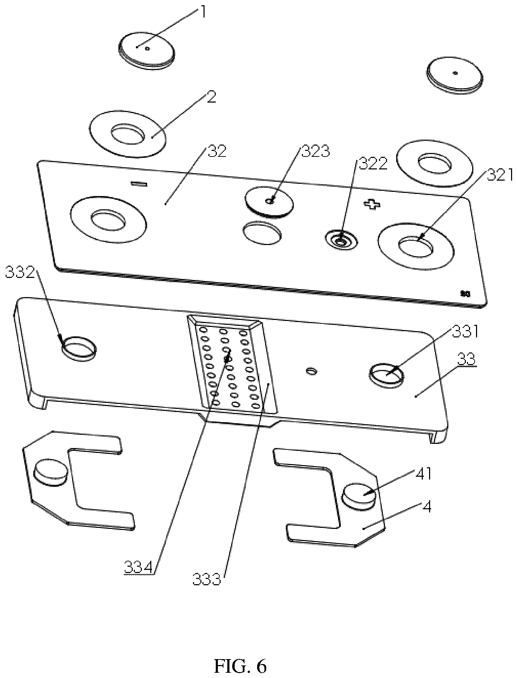

As shown in FIG. 3 and FIG. 6, in an embodiment, the cover plate assembly 3 is provided with a liquid injection port 322 and/or an explosion-proof valve 323.

The liquid injection port 322 is used to inject electrolyte into the battery, and the electrolyte enters an inner cavity of the housing of the battery through the liquid injection port 322. The liquid injection port 322 is enclosed by welding the cover plate or setting an openable cover plate after the liquid injection.

The explosion-proof valve 323 is provided with an annular groove to form a weak structure on the explosion-proof valve 323. When thermal runaway occurs in the battery, the battery may produce a large amount of gas which forms a high pressure inside the battery. At this time, the explosion-proof valve 323 may be fractured at the annular groove to form an opening through which the gas inside the battery can be released, thus, a high pressure explosion of the battery can be finally avoided.

In an embodiment, when the battery includes a plurality of the cover plate assemblies 3, the liquid injection port 322 and the explosion-proof valve 323 can be separately arranged on different cover plate assemblies 3; or, the liquid injection port 322 and the explosion-proof valve 323 can be arranged on the same cover plate assembly 3.

As shown in FIG. 3 and FIG. 6, in an embodiment, the explosion-proof valve 323 is arranged on the metal cover plate 32, a groove 333 is formed in a middle part of the plastic plate 33, an opening of the groove 333 is enclosed by the metal cover plate 32, and the explosion-proof valve 323 is located in the opening of the groove 333. A plurality of ventilation liquid holes 334 are defined in a bottom of the groove 333.

The groove 333 is connected to a surface of the battery cell to avoid the movement of the cell. The ventilation liquid holes 334 are located in the bottom of the groove 333. The groove 333 is capable of storing a certain amount of electrolyte, which improves an overall electrolyte retention amount of the battery. In the battery cycle process, the electrolyte stored in the groove 333 can be used to increse the cycle times of the electrolyte and thus to prolong the service life of the battery.

When thermal runaway occurs in the battery, a large amount of gas is generated. The gas enters the groove 333 through the ventilation liquid holes 334 and is released through the explosion-proof valve 323 by breaking the explosion-proof valve 323.

As shown in FIGS. 2, 3 and 6, in an embodiment, the boss 41 is integrally formed by stretching the busbar 4 towards the electrode post plate 1.

In an embodiment, the boss 41 is integrally formed by stretching the busbar 4 towards the electrode post plate 1, such that the the boss 41 is embedded into the fourth through hole 331 of the plastic plate 33 to assembly and fix the busbar 4 and the boss 41.

As shown in FIGS. 2, 3 and 6, in an embodiment, the busbar 4 may be made of aluminum, copper, nickel, iron, titanium, silver or zirconium.

In an embodiment, the busbar 4 connected with a positive electrode of the battery cell is made of aluminum, and the busbar 4 connected with a negative electrode of the battery cell is made of copper. Aluminum or copper has an excellent conductivity.

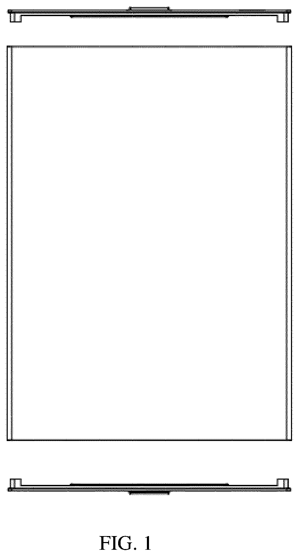

In an embodiment, as shown in FIGS. 1 to 3, a single battery cover plate is provided with a single electrode post plate 1, a single hot-melt adhesive film 2, and a single busbar 4.

In an embodiment, a single battery is provided with two battery cover plate assemblies 3, and the two battery cover plate assemblies 3 are arranged at two ends of the housing of the battery. Two electrode post plates 1 are respectively arranged on the two cover plate assemblies 3 as a positive electrode and a negative electrode. At this time, the busbar 4 is rectangular, the boss 41 is located on a middle part of the busbar 4, the fourth through hole 331 is defined in a middle part of the plastic plate 33, and the third through hole 321 is defined in a middle part of the metal cover plate 32. Thus, the electrode post plate 1, the hot-melt adhesive film 2, the metal cover plate 32, the plastic plate 33 and the busbar 4 are assembled in turned to form the battery cover plate.

In other embodiments, two or more electrode post plates 1, two or more hot-melt adhesive films 2 and two or more busbars 4 can be arranged on a single battery cover plate, and the two or more electrode post plates 1, two or more hot-melt adhesive films 2 and two or more busbars 4 respectively correspond to each other.

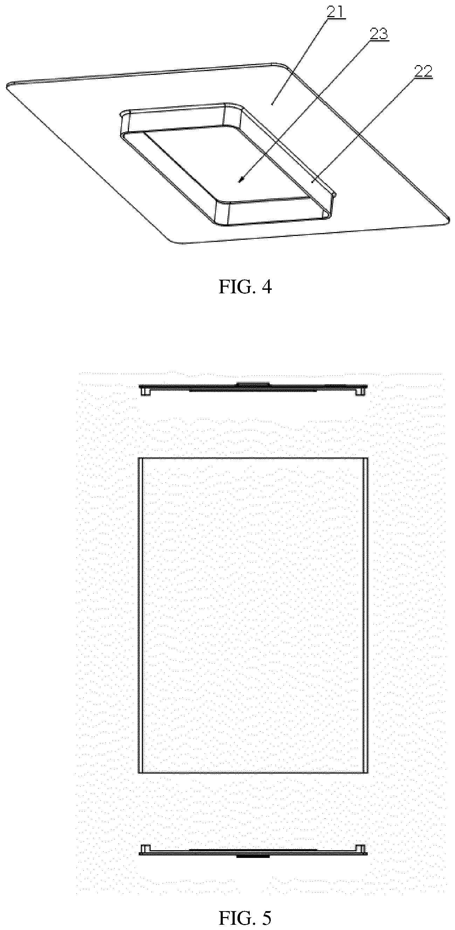

As shown in FIGS. 5 and 6, in an embodiment, two or more electrode post plates 1, two or more hot-melt adhesive films 2 and two or more busbars 4 are arranged on a single battery cover plate, and the two or more electrode post plates 1, the two or more hot-melt adhesive films 2 and the two or more busbars 4 respectively correspond to each other.

Specifically, the housing of the battery is a semi-enclosed housing with one end thereof being opened, and the cover plate assembly 3 encloses the opened end of the housing. Two electrode post plates 1 are respectively arranged on two sides of the cover plate assembly 3 as a positive electrode and a negative electrode. At this time, the busbar 4 includes a bottom plate and the boss 41; the bottom plate is rectangular, a rectangular notch is formed in one side of the bottom plate, and an inclined cut-out is formed in another side of the bottom plate which is not adjacent to the side in which the notch is formed. The boss 41 is embedded in the fourth through hole 331 corresponding to the plastic plate 33. The third through hole 321 is located on left and right sides of the metal cover plate 32. The fourth through hole 331 is located on left and right sides of the plastic plate 33. Thus, the electrode post plate 1, the hot-melt adhesive film 2, the metal cover plate 32, the plastic plate 33 and the busbar 4 are assembled in turn to form the battery cover plate.

In another aspect of the present disclosure, a battery having the battery cover plate in any of the embodiments mentioned above is provided.

As shown in FIG. 6, in an embodiment, the housing of the battery is a semi-enclosed housing with one end thereof being opened, and the cover plate assembly encloses the opened end of the housing.

As shown in FIG. 1, in another embodiment, the housing of the battery is a cylindrical housing with both ends thereof being opened. The number of the battery cover plates is two, and the two battery cover plates respectively enclose two ends of the housing.

In some embodiments, the housing of the battery can be a square housing, a cylindrical housing, a prismatic housing, or any other irregular housing.

The above descriptions are only optional embodiments of the application, and do not limit the scope of the patents of the present application. All the equivalent structural transformations made by the content of the specification and drawings of the present application under the creative concept of the present application, or directly/indirectly used in other related technical fields are all comprised in the protection scope of the patents of the present application.

## Claims

1. A battery cover plate, wherein the battery cover plate is configured for enclosing a housing of a battery to form the battery; the battery cover plate comprises an electrode post plate, a hot-melt adhesive film, a cover plate assembly and a busbar; the cover plate assembly defines a first through hole; the electrode post plate and the busbar are located on two sides of the first through hole of the cover plate assembly, a boss is arranged on the busbar, the boss is embedded in the first through hole, and one end of the boss is connected with the electrode post plate; the hot-melt adhesive film comprises an annular sheet and a sealing gasket cylinder; a second through hole is defined in the annular sheet at a position corresponding to the first through hole, and the sealing gasket cylinder is connected with the second through hole and extends along a direction perpendicular to a plane where the annular sheet is located; the sealing gasket cylinder is arranged between the electrode post plate and the cover plate assembly by thermal fusion, and the sealing gasket cylinder is sleeved between an outer wall of the boss and an inner wall of the first through hole.

2. The battery cover plate according to claim 1, wherein the hot-melt adhesive film is selected from the group consisting of a PP adhesive adhesive film, a PE adhesive film, a polyimide adhesive film, and an epoxy resin adhesive film.

3. The battery cover according to claim 1, wherein the cover plate assembly comprises a plastic plate and a metal cover plate stacked on the plastic plate; a third through hole is defined in the metal cover plate, and a fourth through hole is defined in the plastic plate at a position corresponding to the third through hole, and the third through hole and the fourth through hole are communicated with each other to form the first through hole.

4. The battery cover plate according to claim 3, wherein the plastic plate is provided with an annular protrusion arranged along a peripheral of the fourth through hole and facing towards the metal cover plate, the boss is embedded in the annular protrusion, the annular protrusion is embedded in the third through hole, and the sealing gasket cylinder is connected between an outer wall of the annular protrusion and an inner wall of the third through hole by thermal fusion.

5. The battery cover plate according to claim 3, wherein the cover plate assembly is provided with an explosion-proof valve.

6. The battery cover plate according to claim 5, wherein the explosion-proof valve is arranged on the metal cover plate, a groove is formed in a middle part of the plastic plate, an opening of the groove is enclosed by the metal cover plate, the explosion-proof valve is located at the opening of the groove, and a plurality of ventilation liquid holes are defined in a bottom of the groove.

7. The battery cover plate according to claim 1, wherein the boss is integrally formed by stretching the busbar towards the electrode post plate, and the busbar is made of material selected from a group consisting of aluminum, copper, nickel, iron, titanium, silver, and zirconium.

8. The battery cover plate according to claim 1, wherein a single electrode post plate, a single hot-melt adhesive film and a single busbar are arranged on a single battery cover plate.

9. The battery cover plate according to claim 1, wherein two or more battery cover plates, two or more hot-melt adhesive films, and two or more busbars are arranged on a single battery cover plate; and the two or more electrode post plates, the two or more hot-melt adhesive films, the two or more busbars respectively correspond to each other.

10. The battery cover plate according to claim 3, wherein the cover plate assembly is provided with a liquid injection port and an explosion-proof valve.

11. The battery cover plate according to claim 10, wherein the explosion-proof valve is arranged on the metal cover plate, a groove is formed in a middle part of the plastic plate, an opening of the groove is enclosed by the metal cover plate, the explosion-proof valve is located at the opening of the groove, and a plurality of ventilation liquid holes are defined in a bottom of the groove.

12. A battery, wherein the battery comprises the battery cover plate according to any one of claims 1 to 11.
